# EUROPEAN PATENT SPECIFICATION

(11) **EP 2 947 999 B1**
(45) Date of publication and mention of the grant of the patent: **13.03.2019**
(21) Application number: 14743785.9
(22) Date of filing: 20.01.2014
(51) Int. Cl.: A23G 4/20, A23G 3/54, A23L 29/30

(54) **CENTER-FILLED CONFECTIONS AND METHOD OF MAKING SAME**
SÜSSWAREN MIT FÜLLUNG IN DER MITTE UND VERFAHREN ZUR HERSTELLUNG DAVON
CONFISERIES À GARNITURE CENTRALE ET LEUR PROCÉDÉ DE FABRICATION

(30) Priority: 25.01.2013 US 201361756676 P
(43) Date of publication of application: 02.12.2015
(73) Proprietor: WM. Wrigley Jr. Company, Chicago, IL 60642 (US)
(72) Inventor: CHAN, Lok Yan Ambrose, 28 Tai On Street Sai Wan Ho (HK); CHIN, SheauMeng, Park Ridge, Illinois 60068 (US); BORDERA, Luis, Hinsdale, Illinois 60521 (US); ABAD, Dennis, Woodridge, Illinois 60517 (US); LAU, Wendy, Chicago, Illinois 60612 (US)
(74) Representative: Dehns
(86) International application number: PCT/US2014/012212
(87) International publication number: WO 2014/116540

(56) References cited:
- WO-A1-2013/042028
- US-A- 6 056 988
- US-A1- 2008 063 748
- US-A1- 2009 304 855
- US-A1- 2011 217 427
- US-A1- 2011 256 271
- US-A1- 2012 107 468

## Description

### BACKGROUND OF THE INVENTION

The present invention relates to center-filled confections such as center-filled chewing gums and methods of manufacturing them. More specifically, the present invention relates to center-fill compositions which are filled with a pumpable liquid during manufacturing which pumpable liquid quickly transforms into a crystalline powder after the piece is formed.

Center-filled confections such as chewing gums are attractive to consumers because they provide a novel and refreshing mouth feel when the product is first chewed. Most commonly, such products contain a liquid filling, although granular and paste-filled products are also known. Traditionally the center-filled products were manufactured in large pieces which simplified production and provided a large volume of filling to maximize consumer enjoyment. More recently, center-filled chewing gums have been offered in smaller piece sizes such as in the form of coated pellets to appeal to consumers who prefer a smaller piece of gum. However, this smaller size greatly reduces the quantity of center-fill which may be contained within the piece and consequently greatly reduces the refreshing sensation. The smaller piece size also adds to difficulties in manufacturing the product.

Typically the liquid filling is water-based. The water in a liquid center is prone to migrating into the chewing gum shell, leaving little or no identifiable liquid center. This is especially problematic with the smaller sized products due to the aforementioned reduced quantity of liquid-fill and the high ratio of surface to volume of the center-fill cavity.

The typical method for manufacturing center-fill chewing gums consists of coextruding a confectionery rope having a syrup or paste filling, forming the rope into individual pieces by crimping segments of the rope to seal in the liquid center, separating the pieces and optionally coating them. The syrup or paste is pumped into the rope through a specially designed die fitted to the end of the extruder.

Liquid centers pose problems in the manufacturing process. If the seal created in the piece forming process is imperfect, or if the piece is damaged during manufacture, the center-fill can leak out. This affects not only the leaking piece but other pieces which may be externally contaminated by the leaked fluid. The problem is amplified if the product is to be coated. Not only does this provide additional opportunities for leaking as large masses of pellets are tumbled in a coating drum, but the contamination from one or a few leaking pellets can interfere with the coating process, potentially rendering the entire batch unusable.

As a variation, a granular solid may be substituted for the syrup or paste filling. This granular solid is typically fed by gravity or a gravity assisted auger into the extrusion die which requires the material to be a granular, free-flowing solid. This largely solves the problems with leakage and may improve the sensory properties of the product in some cases. However, some consumers may object to the granular texture of the center-fill which can produce a gritty sensation during consumption. The granular filling process may pose manufacturing problems of its own such as slow production and blockages in the granular feeding apparatus. The nature of the process often leads to a substantial void volume in the center-fill cavity. That is, a large percentage of the cavity in the center of the gum is empty. This further diminishes the amount of center-fill material that can be released from the piece during chewing which reduces the desired sensation for the consumer.

WO2013/042028 discloses a multi-region confection comprising an extruded body portion and a plurality of capillaries disposed in the extruded body portion. The plurality of capillaries includes a confectionery material comprising about 47 to about 95 weight percent of a sugar alcohol, about 1 to about 15 weight percent water, and about 0.1 to about 1.5 weight percent of a slow-set pectin.

US2011256271 discloses a center-filled confection wherein the center composition comprises a bulk sweetener and a fat.

US2009304855 provides a method for thermally sealing a filled chewing gum product, comprising extruding a rope of a chewing gum material comprising an outer layer of a chewing gum material having a first temperature and a center comprising a fill material having a second temperature; and sealing an end of the chewing gum material when the second temperature is greater than the first temperature.

US2011217427 discloses a confectionery product comprising an extruded body portion, the body portion having three or more capillaries disposed therein which extend substantially parallel to one another in two or more different planes, the capillaries being distributed in groups at one or more locations within the body portion and/or distributed around the periphery of the body portion.

### SUMMARY OF THE INVENTION

The present is a solid-filled confectionery product and a method of making the product by preparing an extrudable confectionery shell material, preparing a center-fill composition which is capable of forming a pumpable liquid when heated, wherein the center-fill composition comprises 60 to 90% xylitol by weight, and 5 to less than 30% water by weight, heating the center-fill composition to a temperature sufficient to convert it into a pumpable liquid, holding the liquid center-fill composition at a temperature sufficient to maintain the center-fill composition in a liquid state, coextruding the confectionery shell material and the center-fill composition as a liquid-filled rope, forming the filled rope into individual confectionery pieces, and allowing the confectionery pieces to cool to less than 26°C to form a confectionery piece comprising a confectionary shell at least substantially surrounding a crystalline center-fill; and optionally forming a confectionary coating which substantially surrounds the confectionary shell. At some point during the forming, cooling and storage for a period of time (typically less than three days), the center-fill composition solidifies, typically into a soft, fine, damp crystalline particulate material which may be resistant to flow and which is generally not pumpable in this form. The resulting product is a confectionery piece having a confectionery shell at least substantially surrounding a crystalline center-fill.

The center-fill composition contains 60 to 90% xylitol by weight, and 5 to less than 30% water by weight and optionally other sugars or polyols. (For purposes of the present invention, the term polyol is synonymous with the term sugar alcohol.) By carefully selecting the levels of these components, it is possible to create a center-fill composition which is a pumpable liquid at temperatures suitable for coextruding the filled rope, but which undergoes a phase change within minutes or, at most, a few hours after it has cooled to ambient (room) temperature.

The process and products of the present invention overcome a number of deficiencies with prior art processes and products. The product can provide a profound mouth-cooling and/or liquid sensation despite having only small amounts of solid center-fill. The product is stable over time, meaning that it resists migration of the center-fill composition into the outer shell material (or such migration does not harm and may, in fact, facilitate the conversion of liquid to a crystalline powder.) It can be easily processed using conventional liquid-fill gum equipment. It resists leakage and, consequently, is more suitable for coating than liquid-filled confectioneries.

In some embodiments, the present invention is a center-filled chewing gum wherein the center-fill consists of fine crystalline polyol particles, the majority of which have a largest dimension of less than 100 microns or less than 50 microns or less than 30 microns or less than 20 microns. For purposes of the present invention, 'fine' means that the particle size distribution is as described above.

In some embodiments, the present invention is a center-filled chewing gum wherein the center-fill consists of fine crystalline polyol particles and wherein the center-fill cavity has a void volume less than 15% or less than 12% or less than 10%.

### BRIEF DESCRIPTION OF THE DRAWINGS

FIGURE 1 is a 50X photomicrograph of the granular center-fill material of a comparative prior art product, Hollywood Fresh & Clean Menthe Fraiche®.
FIGURE 2 is a 50X photomicrograph of the granular center-fill material of a comparative prior art product, Mentos Ice Crush Xylitol Gum®.
FIGURE 3 is a 50X photomicrograph of the fine crystalline center-fill material of the present invention.
FIGURE 4 is a 50X photomicrograph of another sample the fine crystalline center-fill material of the present invention.
FIGURE 5 is an X-Ray Tomographic Slice View of a granular filled comparative prior art product, Hollywood Fresh & Clean Menthe Fraiche®.
FIGURE 6 is an X-Ray Tomographic Slice View of a granular filled comparative prior art product, Mentos Ice Crush Xylitol Filled Gum®
FIGURE 7 is an X-Ray Tomographic Slice View of a fine crystalline polyol center-fill product of the present invention.

### DESCRIPTION OF THE INVENTION

The present invention is based on the discovery that certain blends of polyols and water can be maintained as liquids at elevated temperatures and spontaneously convert to a solid, crystalline form upon cooling. This allows for the production of center-filled confections with a fine crystalline filling using similar processes and equipment as used to make liquid-filled confections. In order to function properly in the present invention, the center-fill composition should have several properties. It must form a liquid and remain as a liquid at temperatures below those which might excessively soften or damage the confectionery shell. It is important that the liquid have a low enough viscosity at the processing temperature that it can be easily pumped into the rope forming die. Typically, a liquid will be pumpable if its viscosity is 1000 cps or less with viscosities of less than 500 cps being preferable. Once cooled, the center-fill composition must quickly convert into a solid crystalline form that has acceptable sensory properties, i.e. it must not be gritty or excessively hard. Desirably, the solidified crystalline powder should have a high negative heat of solution so that it conveys a desirable cooling to the mouth when the product is consumed.

In some embodiments, the center-fill composition will be heated to at least 70°C or 80°C or 90°C or at least 100°C to completely liquefy the composition. Once liquefied, the center-fill composition may be cooled and held at a temperature sufficient to maintain it in a liquid state. In some embodiments, the liquid center-fill composition may be held at a temperature of at least 30°C or at least 40°C or at least 50°C or at least 55°C or at least 60°C or at least 65°C to maintain it as a pumpable liquid prior to coextrusion. in some embodiments, the liquid center-fill composition will be maintained at less than 70°C or less than 60°C prior to and during the coextrusion process to prevent problems caused by excessive heat.

The center-fill composition contains 60 to 90% xylitol and 5 to less than 30% water by weight. In some embodiments, the center-fill composition will contain at least 65% or at least 70% or at least 75% or at least 80% xylitol. In some embodiments, the center-fill composition will contain up to 85% xylitol or up to 80% xylitol or up to 70% xylitol by weight. In some embodiments this xylitol center-fill composition will additionally contain up to 35% such as up to 30% or up to 25% or up to 20% or up to 10% or up to 5% of at least one additional sugar and/or polyol. In some embodiments, this xylitol center-fill composition will contain at least 3.5% or at least 5% of one or more additional sugars and/or polyols. In some embodiments, the additional sugar or polyol is selected from the group consisting of sorbitol, erythritol, maltitol, mannitol, hydrogenated starch hydrolysate, isomalt, isomaltulose, sucrose, dextrose and mixtures thereof. In some embodiments, this xylitol center-fill composition will contain sorbitol.. In some embodiments, the xylitol center-fill composition will contain less than 25% water or less than 15% water or less than 13% water. In some embodiments, the xylitol center-fill composition will contain at least 7.5% water by weight.

In some preferred embodiments, the center-fill composition will contain 60 to 90% xylitol, 5 to 30% sorbitol and 5 to 15% water by weight of the center-fill composition.

In some embodiments the center-fill composition will contain less than 1% or less than 0.5% or less than 0.1% glycerin by weight.

Not all such compositions will have the necessary and desired properties for center-fill compositions of the present inventions. Given the large number of permutations of primary polyol/sugar content, water level and the level and identity of additional sugars or polyols which can be used, it is not possible to precisely define all of the possible compositions. Certain specific compositions and composition ranges are identified to provide guidance, but each exact composition is different and must be tested to ensure proper behavior. In general, the more water present, the lower the temperature necessary to convert the composition to a liquid and the slower the conversion to a solid will occur. Lowering the water content will have the opposite effect. The presence of higher levels of additional polyols will also slow the conversion to a solid. The presence of even small amounts of glycerin will greatly delay the conversion or prevent it from occurring altogether. The effect of different primary and additional polyols cannot be predicted without experimentation. However, using the above teachings, formulation guidelines, and the specific examples and techniques disclosed later, the skilled formulator will be able to create many center-fill compositions which have the necessary characteristics to function in the present invention without undue effort.

Many additional minor ingredients such as flavors, high intensity sweeteners, nutritional or pharmaceutical active ingredients and colors may also be added to center-fill compositions which are usable in the present invention. The nature and level of such additives will vary widely and all are usable as long as the composition has the above described characteristics.

In some embodiments, the confectionery shell is a chewing gum composition. In some embodiments, the confectionery shell is a boiled candy. In some embodiments, the confectionery shell is a chewy candy or a nougat or a taffy or a caramel.

The present invention includes the unique confectionery product of the above process. The confectionery product includes a confectionery shell and a crystalline center-fill. The fine crystalline center-fill will typically comprise particles of less than 100 microns. In some embodiments, most of the particles will be smaller than 75 microns or smaller than 50 microns or smaller than 25 microns. For purposes of the present invention, the crystals are considered to have a particle size smaller than the specified value if 90% of the particles by volume are smaller than the value when measured using a Malvern Mastersizer® particle size analyzer or other appropriate method.

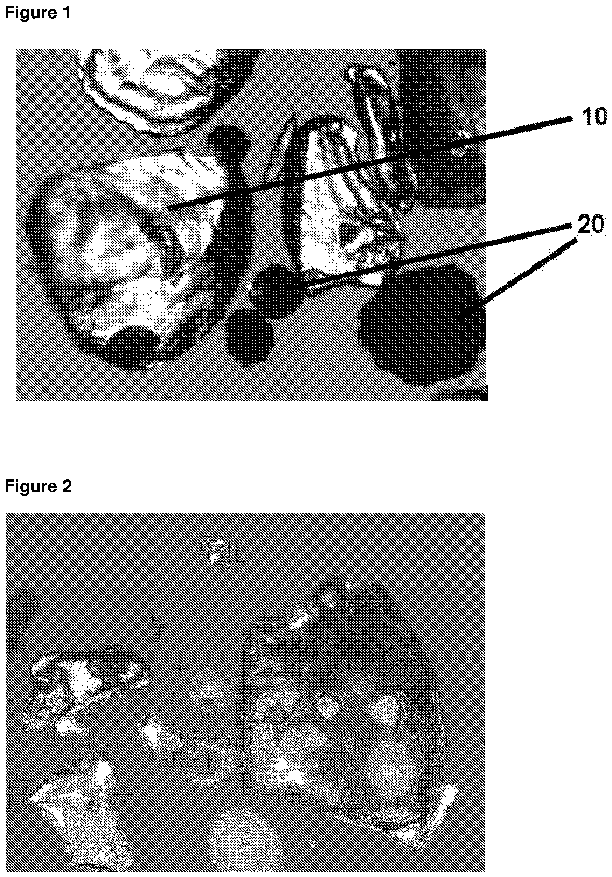

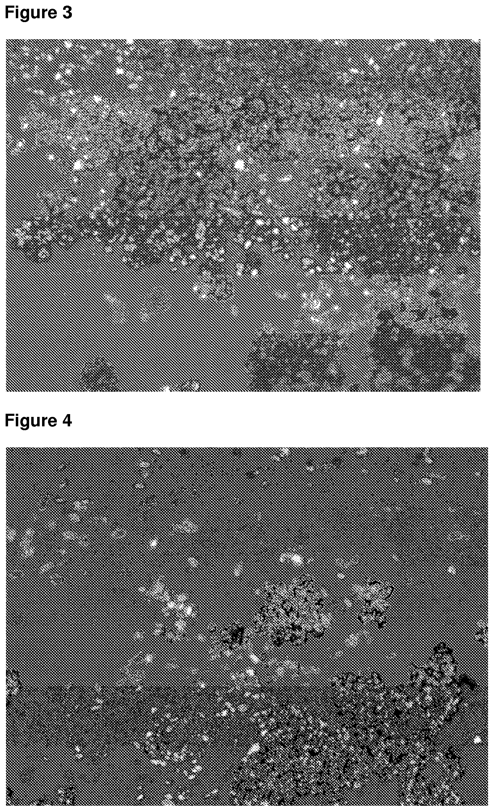

Figures 1 - 4 are photomicrographs of the solid center-fill material from two commercial prior art products and two samples of the present invention. The photographs were taken using cross polarized filters Red Plate of the fill material suspended in silicon oil. Each of the photographs is of the same magnification, the width of the field being approximately 2500 microns. Figure 1 is a 50X photomicrograph of the granular center-fill material of a comparative prior art product, Hollywood Fresh & Clean Menthe Fraiche®. The large crystalline particle **10** being approximately 1000 microns in its largest dimension. The crystalline particle sizes shown were typical of the entire population. The dark spherical particles 20 are noncrystalline and are believed to be encapsulated ingredients which were blended with the crystalline fill material. Figure 2 is a 50X photomicrograph of the granular center-fill material of a comparative prior art product, Mentos Ice Crush Xylitol Gum®. Again the crystals shown are typical of the entire population. In this case the largest crystals are approximately 500 microns in their largest dimension. Figures 3 and 4 are 50X photomicrographs of two samples of the fine crystalline center-fill material of the present invention. The vast majority of the fine crystalline particles range in diameter from less than 20 microns to approximately 50 microns.

One benefit of the present invention is that the particulate center-fill composition provides a strong cooling and/or mouthwatering effect in the mouth, even where the quantity of center-fill is relatively small. Another benefit of the present invention is that the center-fill is stable because it is not capable of migrating into the surrounding confectionery shell or such migration actually benefits the product by ensuring that the center-fill is completely crystallized. A still further benefit of the present invention is that the fine crystalline particulate center-fill has a smooth, soft and pleasant mouth feel.

The fine crystalline xylitol particles which are formed in the products of some embodiments of the present invention rapidly dissolve in the mouth when the product is consumed. That combined with the cooling effect caused by xylitol's negative heat of solution gives a strong impression of liquid in the mouth. For that reason, and because of the problems of high void volume and migration of water from liquid-filled products, the products of the present invention can give a stronger impression of a liquid-fill than actual liquid-filled products having a similar fill volume.

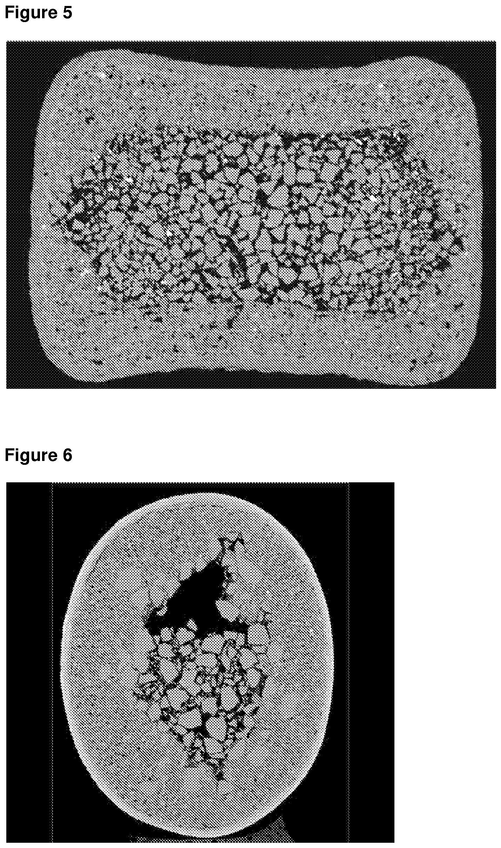

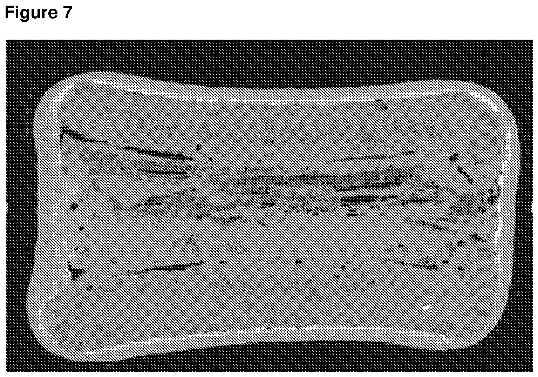

Another benefit of the present invention is that it allows more complete filling of the center-fill cavity compared to prior art granular fill methods. The prior art methods require the formation of a cavity which is later filled with granular material by a gravity feed process. The poor efficiency of this process combined with flow problems can result in significant void volume, i.e. volume in the center-fill cavity which does not contain any confectionery material. Figures 5 - 7 show X-ray tomographs of two prior art solid granular fill products and a product of the present invention. Image analysis of the tomographs was used to quantitatively estimate the void volume (dark areas) in each of the products. The prior art Hollywood Fresh & Clean Menthe Fraiche® product (Figure 5) was found to have a void volume of 18.65% of the center-fill cavity when measured in this manner.. The prior art Mentos Ice Crush Xylitol® product (Figure 6) was found to have a void volume of 57.29% of the center-fill cavity. A product of the present invention (Figure 7) was found to have a void volume of 8.44%.

The fine crystalline xylitol particles which are formed in the products of some embodiments of the present invention rapidly dissolve in the mouth when the product is consumed. That combined with the cooling effect caused by xylitol's negative heat of solution gives a strong impression of liquid in the mouth. For that reason, and because of migration of water from liquid-filled products, the products of the present invention can give a stronger impression of a liquid-fill than actual liquid-filled products having a similar fill volume.

One benefit of the method of the present invention is that the center-fill can be easily pumped through a die to form the center-filled rope as compared to other solid center-fill compositions which must depend on gravity and/or a screw to push them into the rope. It is a further benefit of the present invention that the formed pieces of center-fill confection are resistant to leaking caused by defective sealing or rough handling as compared to liquid-filled confections.

The present invention provides a center-fill confectionery composition and center-filled confections and chewing gums and methods of making them. More specifically, the present invention provides for chewing gums and confectionery compositions which have as a center-filling, a crystalline solid which may provide sweetness, flavor and/or a cooling sensation, even when the amount of center-fill composition is relatively small.

The center-fill confections of the present invention can be prepared by mixing ingredients of a center-fill composition which is capable of forming a pumpable liquid at elevated temperatures, wherein the center-fill composition comprises 60 to 90% xylitol by weight, and 5 to less than 30% water by weight. The center-fill composition is mixed and heated to a temperature sufficient to convert it into a pumpable fluid and held at an elevated temperature (compared to ambient) which is sufficient to keep the composition in liquid form through the filling and forming process.

Center-filled confections of the present invention are typically manufactured by pumping the liquid center-fill composition through an extrusion die which is fixed to an extruder which extrudes a confectionery material such as a chewing gum. The die is designed and configured to form a filled rope wherein an outer shell of the confectionery material surrounds the inner center-fill composition. While variations in equipment and the exact process are possible, the process of forming the center-filled rope from the center-fill composition and the confectionery shell composition will be referred to as coextrusion or coextruding, however it is accomplished.

The filled rope is then typically sized (i.e. adjusted to a consistent diameter and/or profile) such as by passing it through one or more pairs of sizing rollers. The rope is then passed through a forming device, such as a uniplast rotary die forming machine, which crimps the rope into segments which form the individual pieces of center-filled confection. Other types of forming devices such as the gumball forming devices shown in WO 2007130915 may also be used.

Upon leaving the extrusion die, the formed rope will begin to cool as it encounters the ambient air. This cooling process will typically continue through the forming process and thereafter. In some applications the pieces will be actively cooled through the use of fans, conditioning rooms, cooling tunnels or the like. In other cases, the pieces may be allowed to cool by continued exposure to ambient air. As the temperature of the center-fill composition within the confectionery shell drops to about 26°C and below, the center-fill composition will begin to undergo a phase change from a fluid liquid to a crystalline or amorphous solid. This transition may occur quickly, for example within seconds or it may be more gradual, taking hours or even a few days. Once the phase change has completed, the center-fill composition is resistant to flow, migration and re-liquefaction.

It will be understood that the above describes a typical sequence of steps in preparing center-filled confections of the present invention. Within the present disclosure variations in the sequence of steps or omission of some steps are possible. For example, the center-filled rope may be cooled to allow the phase change to occur before forming the individual pieces or the sizing step may be omitted entirely. Or the sizing and forming operation may be run on heated apparatus or in a high temperature ambient environment such that cooling does not begin until sometime after pieces are formed.

Other than the use of the novel center-fill compositions and their behavior (solidification) upon cooling from the fluid state, processes and apparatuses suitable for making center-filled confectionery products of the present invention are generally well known in the industry. Details of and variations in such processes and apparatuses can be learned, for example from the following references: US 6,284,291; US 6,838,098; US 7,658,602; US 7,470,119 and US 2009/0304855.

Once formed, the confectionery piece may be wrapped and shipped. It may be desirable to delay this further handling until after the phase change has completed and the product is more stable.

In some cases, the filled confectionery piece will be surrounded or at least substantially surrounded by a coating of sugar or sugar alcohol or wax or chocolate. Such coatings may be applied, for example, by pan coating with aqueous syrups and dry charges of sugar or polyol, by enrobing with a molten coating or by spraying or atomizing the coating material in solution or molten form. In such cases the coating will typically be applied as an added step after forming the product and preferably after the formed product has cooled and the center-fill composition has solidified. In many cases this will not actually delay or slow production since it is common practice to temper confectionery centers prior to coating and in many cases this normal conditioning will be sufficient for the phase change to be substantially completed. Alternatively, a coating layer may be coextruded around the confectionery rope using a concentric die prior to forming the individual pieces.

Typically the coating, if applied, will be composed primarily of a sugar or polyol (sugar alcohol) having a hard crystalline or soft, amorphous structure. For example, pan coatings of sucrose, sorbitol, xylitol, maltitol and isomalt are widely known and used in the confectionery industry to coat fruit pieces, nuts, candy and chewing gum centers. These may be applied as a series of layers of sugar or polyol syrup with or without powder applications (dry charge) and forced air drying between syrup applications. Other ingredients such as binding agents, colors, high intensity sweeteners, flavors, and nutritional or medicinal actives may be included in the coating either by blending into the syrup or direct addition into the coating pan between syrup additions.

Details of such pan coating processes, formulas and apparatuses may be found in the following references: US 4,499,847; US 6,872,415; US 7,810,446; US 4,840,797 and US 5,900,261.

Other types of coatings, such as film coatings may be applied to the pieces. Coating materials such as waxes, polyvinyl acetate, shellac and others known for use in such types of coating may be used. Such film coatings may be applied over a pan coating or may be used instead of pan coating.

The confectionery material used in the shell of the may be any such material which is suitable for use in a coextrusion process. Generally these will be a soft, hard or chewy candy or chewing gum composition. The preferred confectionery composition is a chewing gum.

The fundamental components of a chewing gum typically are a water-insoluble gum base portion and a water-soluble bulking agent portion. The primary component of the gum base is an elastomeric polymer which provides the characteristic chewy texture of the product. The gum base will typically include other ingredients which modify the chewing properties or aid in processing the product. These include plasticizers, softeners, fillers, emulsifiers, plastic resins, as well as colorants and antioxidants. The water soluble portion of the chewing gum typically includes a bulking agent together with minor amounts of secondary components such as flavors, high-intensity sweeteners, colorants, water-soluble softeners, gum emulsifiers, acidulants and sensates. Typically, the water-soluble portion, sensates, and flavors dissipate during chewing and the gum base is retained in the mouth throughout the chew.

Any suitable chewing gum base and chewing gum formula may be used to produce a shell for center-filled chewing gums of the present invention. By suitable it is meant that the formula is capable of being processed through the selected equipment.

The insoluble gum base typically may contain any combination of elastomers, vinyl polymers, elastomer plasticizers, fillers, softeners, waxes and other optional ingredients such as colorants and antioxidants. The variety of gum base ingredients typically used provide the ability to modify the chewing characteristics of gums made from the gum base.

Elastomers provide the rubbery, cohesive nature to the gum which varies depending on this ingredient's chemical structure and how it may be compounded with other ingredients. Natural elastomers may include natural rubber such as smoked or liquid latex and guayule, natural gums such as jelutong, lechi caspi perillo, massaranduba balata, massaranduba chocolate, nispero, rosidinha, chicle, gutta percha, gutta kataiu, niger gutta, tenu, chilte, chiquibul, gutta hang kang. Synthetic elastomers may include high molecular weight elastomers such as butadiene-styrene copolymers and isobutylene-isoprene copolymers. Other polymers which sometimes serve as elastomers include polybutadiene and polyisobutylene, vinyl polymers such as polyvinyl acetate, polyethylene, vinyl copolymeric elastomers such as vinyl acetate/vinyl laurate, vinyl acetate/vinyl stearate, ethylene/vinyl acetate, polyvinyl alcohol or mixtures thereof. These polymers perform best when used in combination with butadiene-styrene copolymers and isobutylene-isoprene copolymers.

Vinyl polymeric and copolymeric type elastomers provide tack resistance, vary the chew characteristics of gums made from these bases and offer hydrophilic properties beneficial to sensory perception of the final gums. For copolymeric types, the amount of vinyl laurate, vinyl stearate, or ethylene present in the vinyl laurate/vinyl acetate (VLNA), vinyl stearate/vinyl acetate (VSNA), or ethylene/vinyl acetate (EVA) copolymers respectively typically ranges from about 10 to about 60 percent by weight of the copolymer. Average molecular weights of these polymers may range from about 2,000 to about 80,000. Ball and ring softening points of these polymers may range from about to 50 to 120°C. Polyvinyl acetate having an average molecular weight from about 8,000 to about 52,000 are preferred for use in the gum base and gum of the present invention. More preferred for chewing gum bases are those of from about 10,000 to about 35,000 molecular weight, and for bubble gum bases, those having from about 30,000 to about 60,000 molecular weight. Vinyl polymers typically release flavor quickly, and using iso-alkanic waxes exhibiting small crystalline structure with these vinyl polymers extends flavor release.

Petroleum waxes aid in the curing of the finished gum made from the gum base as well as improve shelf-life and texture. Wax crystal size when hard also improves the release of flavor. Those waxes high in iso-alkanes have a smaller crystal size than those waxes high in normal-alkanes, especially those with normal-alkanes of carbon numbers less than 30. The smaller crystal size allows slower release of flavor since there is more hindrance of the flavor's escape from this wax versus a wax having larger crystal sizes.

Synthetic waxes are produced by means atypical of petroleum wax production The synthetic waxes may include waxes containing branched alkanes and copolymerized with monomers such as, but not limited to, propylene and polyethylene and Fischer-Tropsch type waxes. Polyethylene wax is not in the same category as polyethylene, a polymer of ethylene monomers.

Elastomer solvents (sometimes called elastomer plasticizers) vary the firmness of the gum base. Their specificity on elastomer inter-molecular chain breaking (plasticizing) along with their varying softening points cause varying degrees of finished gum firmness when used in base. This is also important when one wishes to provide more elastomeric chain exposure to the alkanic chains of the waxes. Elastomer solvents include natural rosin esters such as glycerol ester of partially hydrogenated rosin, glycerol ester of polymerized rosin, glycerol ester of partially dimerized rosin, glycerol ester of rosin, glycerol ester of tall oil rosin, pentaerythritol esters of partially hydrogenated rosin, partially hydrogenated methyl esters of rosin, pentaerythritol ester of rosin, synthetic elastomer plasticizers such as terpene resins derived from .aipha-pinene, beta-pinene and/or d-limonene, and mixtures thereof. The elastomer solvents used may be of one type or of combinations of more than one. Typically, the ratios of one to the other are dependent on each respective softening point, on each effect on flavor release, and on each respective degree of tack they cause to the gum. Ball and ring softening points of the rosin ester types described above may range from about 60 to about 120°C. Softening points of the terpene resins may range from about 60 to about 130°C and an average molecular weight of from about 500 to 2,000. Occasionally, both terpene and rosin ester resins may be used together.

Softeners modify the texture, cause the hydrophobic and hydrophilic components of the base to be miscible, and may further plasticize the synthetic elastomers of the gum base. Softeners include fully hydrogenated oils of cottonseed, soybean, palm, palm kernel, coconut, safflower and the like, as well as monoglycerides, diglycerides, acetylated monoglycerides, distilled mono- and digiycerides and de-oiled or "powdered" lecithin. The glycerides and lecithin are sometimes referred to as emulsifiers.

Fillers used in gum base modify the texture of the gum base and aid in processing. Fillers include carbonate or precipitated carbonated types such as magnesium and calcium carbonate, ground limestone and silicate types such as magnesium and aluminum silicate, clay, alumina, talc, as well as titanium oxide, mono-di- and tricalcium phosphate, cellulose polymers such as ethyl, methyl and wood or mixtures thereof.

Other optional ingredients such as antioxidants and colorants may also be used in the gum base. Antioxidants prolong shelf-life and storage of gum base, finished gum or their respective components including fats and flavor oils. Antioxidants suitable for use in gum base or gum of the present invention include butyiated hydroxyanisole (BHA), butylated hydroxytoluene (BHT), beta -carotenes, tocopherols, acidulants such as Vitamin C, propyl gallate, other synthetic and natural types or mixtures thereof in free-flowing ground or pulverized form.

The soluble portion of chewing gums is composed of flavoring agents (including sensates such as physiological cooling agents, warming agents and tingling agents), bulking agents (also called bulk sweeteners), high intensity sweeteners, colors, acidulants, fillers, emulsifiers, water soluble softening agents and binders.

Bulk sweeteners include both sugars and sugar alcohols. Bulk sweeteners typically constitute about 5% to about 95% by weight of the chewing gum, more typically, about 20% to about 80% by weight, and more commonly, about 30% to about 60% by weight of the gum. Sugar sweeteners generally include saccharide-containing components commonly known in the chewing gum art, including but not limited to, sucrose, dextrose, maltose, dextrin, dried invert sugar, fructose, galactose, corn syrup solids, and the like, alone or in combination. Sugarless sweeteners include, but are not limited to, sugar alcohols such as sorbitol, mannitol, xylitol, hydrogenated starch hydrolysates, maltitol, erythritol, isomalt and the like, alone or in combination.

High-intensity artificial sweeteners can also be used, alone or in combination, with the above. Preferred sweeteners include, but are not limited to, sucralose, aspartame, N-substituted APM derivatives such as neotame, salts of acesulfame, alitame, saccharin and its salts, cyclamic acid and its salts, glycyrrhizin, dihydrochalcones, thaumatin, monellin, stevia and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extrusion may be used to achieve the desired release characteristics.

Softeners are added to the chewing gum in order to optimize the chewability and mouth feel of the gum. The softeners, which are also known as plasticizers and plasticizing agents, generally constitute between approximately 0.5% to about 15% by weight of the chewing gum. The softeners may include glycerin, lecithin, and combinations thereof. Aqueous sweetener solutions such as those containing sorbitol, hydrogenated starch hydrolysates, corn syrup and combinations thereof, may also be used as softeners and binding agents in chewing gum.

Combinations of sugar and/or sugarless sweeteners may be used in chewing gum. Additionally, the softener may also provide additional sweetness such as with aqueous sugar or alditol solutions.

If a low calorie gum is desired, a low calorie bulking agent can be used. Examples of low calorie bulking agents include: polydextrose; oligofructose (Raftilose); inulin (Raftilin); fructooligosaccharides (NutraFlora); palatinose oligosaccharide; guar gum hydrolysate (BeneFiber); or indigestible dextrin (Fibersol). However, other low calorie bulking agents can be used.

A variety of flavoring agents can also be used, if desired. The flavor can be used in amounts of about 0.1 to about 15 weight percent of the gum, and preferably, about 0.2% to about 5% by weight. Flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion. Included in the general category of flavors are sensates, chemicals which impart physiological sensations in the mouth such as cooling agents, warming agents and tingling agents. Examples of cooling agents include menthol, WS-23, WS-3, WS-5, isopulegol, esters of menthol such as menthyl succinate, menthyl lactate and menthyl glutarate, among others. Warming and tingling agents include capsaicin, piperine, jambu and spilanthol.

In general, chewing gum is manufactured by sequentially adding the various chewing gum ingredients to a commercially available mixer known in the art. After the ingredients have been thoroughly mixed, the gum mass is discharged from the mixer. In the present invention, the gum mass is then coextruded with the center-fill as previously described.

Soft, chewy or hard candy compositions may be substituted for the chewing gum in the co-extrusion process. Any confectionery material may be used for the shell portion as long as it can be extruded at the elevated extruder temperatures and, upon cooling, has sufficient structural integrity to endure further processing, packaging, shipping, retail and consumer handling.

It is possible to use other processes and equipment to form the center-filled rope. For example, a batch roller may be employed for this purpose. For purposes of this invention, all processes capable of forming a center-filled rope will be considered as coextrusion processes within the scope of the claimed method.

Generally, the phase change will occur after formation of the individual segments or pieces of center-filled confectionery. The transition may be accelerated by cooling the segments of pieces, for example in a cooling tunnel, shortly after the piece forming operation. In some cases the transition will occur in minutes, but in other cases it may take up to 72 hours before the phase change occurs. It is generally preferable that the transition not occur prior to or during piece forming. Preferably the transition will occur soon after piece forming such as within five minutes or within ten minutes or within 30 minutes or within an hour or within three hours.

### EXAMPLES

In order to quickly screen center-fill compositions for performance suitable for the present invention, a simple test was developed. Fifty grams of a mixed center-fill composition was placed in a 250ml beaker and heated on a hot plate set to high heat with stirring. A temperature probe was used to monitor the temperature of the composition. When the composition became a clear liquid, the heat was removed, stirring continued and a timer was started. The composition was allowed to cool at room temperature while the liquid was visually monitored for signs of solidification or crystallization under constant stirring. The time and temperature were recorded when the first signs of crystallization or solidification were observed. If no solidification or crystallization was observed within an hour, the liquid was spread on wax paper and observed periodically for signs of solidification. Tables 1 and 2 show the results for Examples and Comparative Runs which were tested by the inventors.

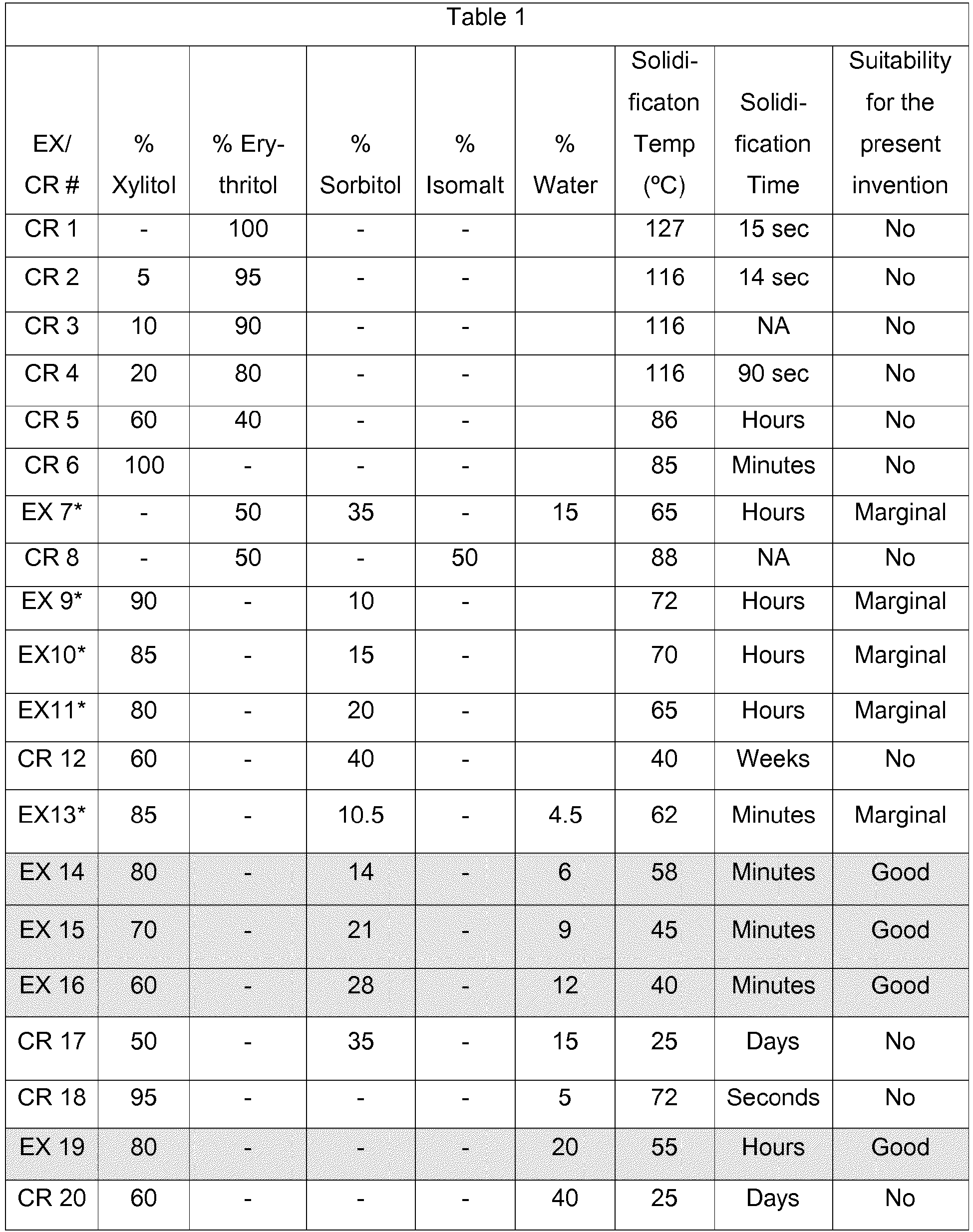

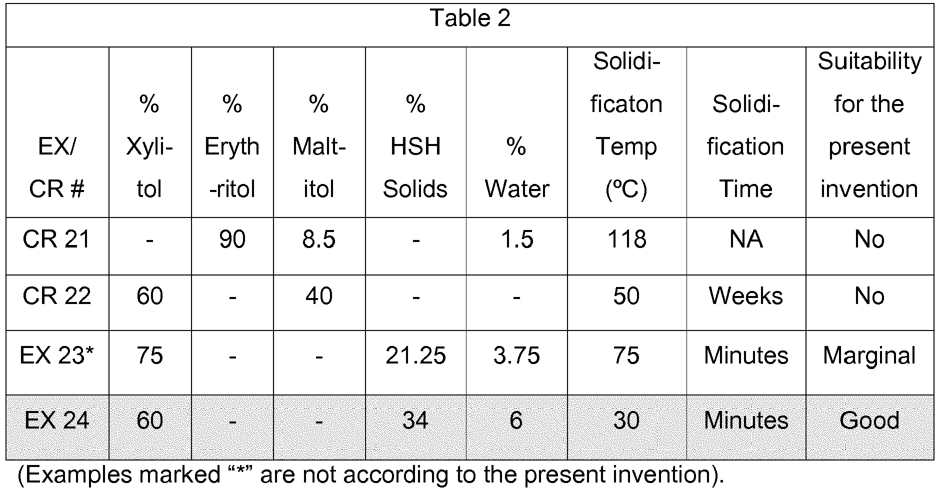

Center-fill compositions which solidified above 80°C were considered unsuitable for the present invention due to the concern about overheating of the confectionery shell. Compositions which solidified in seconds, or which required weeks to solidify were also considered unacceptable. Compositions which solidified at temperatures between 60°C and 80°C and which had acceptable solidification times (i.e. minutes to days) were judged 'Marginal'. Center-fill compositions which solidified within minutes or hours at temperatures between 30°C and 60°C were considered 'Good', i.e. entirely acceptable for use in the present invention.

Filled chewing gums were made according to the present invention. Chewing gum compositions were made according to the formulas in Table 3. All percentages are percentages by weight of the composition.

| Table 3 | | |
|---|---|---|
| | Example 25 | Example 26 |
| Gum Base | 42.49 | 42.49 |
| Sorbitol | 30.80 | 30.80 |
| Maltitiol | 10.00 | 10.00 |
| Erythritol | - | 10.00 |
| Mannitol | 10.00 | - |
| Sorbitol 70% solution | 2.00 | 2.00 |
| Free and encapsulated high-intensity sweeteners | 0.92 | 0.92 |
| Mint and Cooling Agent Blend | 3.79 | 3.79 |
| Total | 100.00 | 100.00 |

Center-fill compositions were produced according the formula in Table 4.

| Table 4 | |
|---|---|
| | Example 27 |
| Xylitol | 64.99 |
| Sorbitol 70% solution | 34.99 |
| Blue Color | 0.02 |
| Total | 100.00 |

The actual composition of the center-fill was 64.99% xylitol, 24.49% sorbitol, 10.5% water and 0.02% color.

Xylitol was heated to about 100°C until all of the solids had dissolved. The xylitol syrup was cooled to about 90°C with stirring and the Sorbitol 70% solution and color were blended with it. The center-fill composition was cooled and maintained at 60C until it was pumped through a laboratory scale coextrusion die along with the chewing gum compositions of Examples 25 and 26 to create confectionery ropes having a chewing gum outer layer and the pumpable liquid filling. The ropes were immediately fed into a laboratory scale pelletizer which crimped the gum to form pellets approximately 1 cm. wide by 2 cm. long. Because the pelletizer was not designed for use in making filled pellets, there was significant leakage at the pellet ends which was readily identifiable by the blue color. However, after cooling at room temperature for 60-90 minutes. The filling converted into a fine crystalline filling. Upon cutting open the pellets, the fine crystalline powder was somewhat compacted together but was easily crushed between the fingers into a loose fine powder.

After tempering for about one day, the pellets were pan coated with maltitol syrup to create a hard coating. The coated products are designated Examples 28 and 29 as indicated in Table 5. Despite the leakage of center-fill, the pellets coated successfully.

| Table 5 | | | |
|---|---|---|---|
| | Chewing Gum Shell | Filling | Coating |
| Example 28 | Example 25 | Example 27 | Maltitol |
| Example 29 | Example 26 | Example 27 | Maltitol |

The chewing gum products of Examples 28 and 29 had a crunchy coating and a cool, refreshing mouthfeel and sweetness from the crystalline filling.

## Claims

1. A method of producing a center-filled confectionery product comprising the steps of;
preparing an extrudable confectionery shell material,
preparing a center-fill composition which is capable of forming a pumpable liquid when heated, wherein the center-fill composition comprises 60 to 90% xylitol by weight, and 5 to less than 30% water by weight,
heating the center-fill composition to a temperature sufficient to convert it into a pumpable liquid,
holding the liquid center-fill composition at a temperature sufficient to maintain the center-fill composition in a liquid state,
coextruding the confectionery shell material and the center-fill composition as a liquid-filled rope,
forming the filled rope into individual confectionery pieces, and
allowing the confectionery pieces to cool to less than 26°C to form a confectionery piece comprising a confectionery shell at least substantially surrounding a crystalline center-fill; and optionally
forming a confectionery coating which substantially surrounds the confectionery shell.

2. The method of claim 1 wherein the center-fill composition is heated to a temperature of at least 80°C.

3. The method of claim 1 wherein the center-fill composition is held at a temperature of at least 20°C, such as at least 35°C, such as at least 50°C, such as at least 60°C.

4. The method of any of claims 1 to 3 wherein the center-fill composition comprises up to 35% by weight of a polyol other than xylitol, such as 3.5 to 35% by weight of sorbitol.

5. The method of any of claims 1 to 3 wherein the center-fill composition comprises less than 0.1% glycerin by weight.

6. The method of any of claims 1 to 3 wherein the center-fill composition comprises less than 25% water by weight, such as less than 15% water by weight, such as less than 13% water by weight.

7. The method of claim 1 wherein the center-fill composition comprises 60 to 70% xylitol, 20 to 30% sorbitol and 5 to 15% water by weight.

8. The method of any of claims 1 to 7 wherein the confectionery shell material is a chewing gum.

9. A confectionery product comprising a confectionery shell surrounding a center-fill composition, the center-fill composition comprising 60 to 90% xylitol by weight and 5 to less than 30% water by weight, and wherein the center-fill composition is in the form of a pumpable liquid when held at a temperature between 30°C and 70°C and which forms a crystalline solid in less than 72 hours when cooled to a temperature below 26°C.

## Patentansprüche

1. Verfahren zur Herstellung eines in der Mitte gefüllten Süßwarenprodukts, umfassend die folgenden Schritte;
Vorbereiten eines extrudierbaren Süßwarenumhüllungsmaterials,
Vorbereiten eines Mittenfüllungsgemischs, das imstande ist, bei Erhitzung eine pumpfähige Flüssigkeit zu formen, wobei das Mittenfüllungsgemisch 60 bis 90 Gew.-% Xylitol und 5 bis weniger als 30 Gew.-% Wasser umfasst,
Erhitzen des Mittenfüllungsgemischs auf eine Temperatur, die ausreicht, um es in eine pumpfähige Flüssigkeit zu verwandeln,
Halten des flüssigen Mittenfüllungsgemischs bei einer Temperatur, die ausreicht, um das Mittenfüllungsgemisch in einem flüssigen Zustand zu erhalten,
Koextrudieren des Süßwarenumhüllungsmaterials und des Mittenfüllungsgemischs als einen flüssigkeitsgefüllten Strang,
Formen des gefüllten Strangs in einzelne Süßwarenstücke, und
den Süßwarenstücken ein Abkühlen auf weniger als 26 °C ermöglichen, um ein Süßwarenstück zu formen, das eine Süßwarenumhüllung umfasst, die mindestens im Wesentlichen eine kristalline Mittenfüllung umgibt; und wahlweise
Formen eines Süßwarenüberzugs, der im Wesentlichen die Süßwarenumhüllung umgibt.

2. Verfahren nach Anspruch 1, wobei das Mittenfüllungsgemisch auf eine Temperatur von mindestens 80 °C erhitzt wird.

3. Verfahren nach Anspruch 1, wobei das Mittenfüllungsgemisch bei einer Temperatur von mindestens 20 °C, wie mindestens 35 °C, wie mindestens 50 °C, wie mindestens 60 °C, gehalten wird.

4. Verfahren nach einem der Ansprüche 1 bis 3, wobei das Mittenfüllungsgemisch bis zu 35 Gew.-% eines Polyols, das nicht Xylitol ist, wie 3,5 bis 35 Gew.-% Sorbitol, umfasst.

5. Verfahren nach einem der Ansprüche 1 bis 3, wobei das Mittenfüllungsgemisch weniger als 0,1 Gew.-% Glycerin umfasst.

6. Verfahren nach einem der Ansprüche 1 bis 3, wobei das Mittenfüllungsgemisch weniger als 25 Gew.-% Wasser, wie weniger als 15 Gew.-% Wasser, wie weniger als 13 Gew.-% Wasser, umfasst.

7. Verfahren nach Anspruch 1, wobei das Mittenfüllungsgemisch 60 bis 70 Gew.-% Xylitol, 20 bis 30 Gew.-% Sorbitol und 5 bis 15 Gew.-% Wasser umfasst.

8. Verfahren nach einem der Ansprüche 1 bis 7, wobei das Süßwarenumhüllungsmaterial ein Kaugummi ist.

9. Süßwarenprodukt, umfassend eine Süßwarenumhüllung, die ein Mittenfüllungsgemisch umgibt, wobei das Mittenfüllungsgemisch 60 bis 90 Gew.-% Xylitol und 5 bis weniger als 30 Gew.-% Wasser umfasst, und wobei das Mittenfüllungsgemisch in der Form einer pumpfähigen Flüssigkeit ist, wenn es bei einer Temperatur zwischen 30 °C und 70 °C gehalten wird, und es in weniger als 72 Stunden einen kristallinen Feststoff formt, wenn es auf eine Temperatur unter 26 °C abgekühlt wird.

## Revendications

1. Procédé de production d'un produit de confiserie fourré comprenant les étapes de;
préparation d'une matière pouvant être extrudée de coque de confiserie,
préparation d'une composition de fourrage qui est susceptible de former un liquide pouvant être pompé quand il est chauffé, dans laquelle la composition de fourrage comprend de 60 à 90 % en poids de xylitol et de 5 à moins de 30 % en poids d'eau,
chauffage de la composition de fourrage à une température suffisante pour la transformer en un liquide pouvant être pompé,
maintien de la composition de fourrage liquide à une température suffisante pour maintenir la composition de fourrage dans un état liquide,
coextrusion de la matière de coque de confiserie et de la composition de fourrage comme un cordon rempli de liquide,
formation du cordon rempli en pièces de confiserie individuelles, et
permission aux pièces de confiserie de refroidir à moins de 26 °C pour former une pièce de confiserie comprenant une coque de confiserie entourant au moins sensiblement un fourrage cristallin ; et de manière facultative
formation d'un revêtement de confiserie qui entoure sensiblement la coque de confiserie.

2. Procédé selon la revendication 1, dans lequel la composition de fourrage est chauffée jusqu'à une température d'au moins 80 °C.

3. Procédé selon la revendication 1, dans lequel la composition de fourrage est maintenue à une température d'au moins 20 °C, telle qu'au moins 35 °C, telle qu'au moins 50 °C, telle qu'au moins 60 °C.

4. Procédé selon l'une quelconque des revendications 1 à 3, dans lequel la composition de fourrage comprend jusqu'à 35 % en poids d'un polyol autre que du xylitol, tel que 3,5 à 35 % en poids de sorbitol.

5. Procédé selon l'une quelconque des revendications 1 à 3, dans lequel la composition de fourrage comprend moins de 0,1 % en poids de glycérine.

6. Procédé selon l'une quelconque des revendications 1 à 3, dans lequel la composition de fourrage comprend moins de 25 % en poids d'eau, tel que moins de 15 % en poids d'eau, tel que moins de 13 % en poids d'eau.

7. Procédé selon la revendication 1, dans lequel la composition de fourrage comprend de 60 à 70 % de xylitol, de 20 à 30 % de sorbitol et de 5 à 15 % d'eau, en poids.

8. Procédé selon l'une quelconque des revendications 1 à 7, dans lequel la matière de coque de confiserie est un chewing-gum.

9. Produit de confiserie comprenant une coque de confiserie entourant une composition de fourrage, la composition de fourrage comprenant de 60 à 90 % en poids de xylitol et de 5 à moins de 30 % en poids d'eau, et dans lequel la composition de fourrage est sous la forme d'un liquide pouvant être pompé quand il est maintenu à une température entre 30 °C et 70 °C et qui forme un solide cristallin en moins de 72 heures quand il est refroidi jusqu'à une température inférieure à 26 °C.
